(19) Europäisches Patentamt
European Patent Office
Office européen des brevets

(11) **EP 4 618 401 A1**

(12) **EUROPEAN PATENT APPLICATION**
published in accordance with Art. 153(4) EPC

(43) Date of publication:
**17.09.2025 Bulletin 2025/38**

(21) Application number: 24853248.3

(22) Date of filing: **25.04.2024**

(51) International Patent Classification (IPC):
*H02P 5/46* (2006.01)   *H02P 21/18* (2016.01)
*H02P 21/20* (2016.01)

(52) Cooperative Patent Classification (CPC):
H02P 5/46; H02P 5/74; H02P 5/747; H02P 21/18

(86) International application number:
**PCT/CN2024/089796**

(87) International publication number:
**WO 2025/035832 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 CN 202311042386**

(71) Applicant: **Zhe Jiang Siekon Transmission
Technology Co., Ltd
Jiaxing, Zhejiang 314500 (CN)**

(72) Inventors:
• YU, Wenyong
  Jiaxing, Zhejiang 314500 (CN)
• WANG, Zhangjiang
  Jiaxing, Zhejiang 314500 (US)
• JIN, Jianhua
  Jiaxing, Zhejiang 314500 (CN)
• YANG, Chao
  Jiaxing, Zhejiang 314500 (CN)
• HUANG, Fengli
  Jiaxing, Zhejiang 314500 (CN)

(74) Representative: **Metida
Gyneju str. 16
01109 Vilnius (LT)**

(54) **CONTROL METHOD FOR ELECTRIC MOTORS IN SERIES CONNECTION**

(57)    The present disclosure discloses a control method for electric motors in series connection, relating to the technical field of electric motor control and solving problems of rotational speed synchronization, energy consumption and emergency protection of electric motors with axes connected in series connection. The control method includes: connecting axes of n electric motors in series connection, and collecting basic parameters of each electric motor; synthesizing a voltage space vector reference value; acquiring an expected voltage output vector; realizing the rotational speed synchronization and load balancing of the electric motors with the axes connected in series connection; and monitoring a working process of the electric motors with the axes connected in series connection in real time and solving the fault. The present disclosure greatly improves a collaboration ability of the electric motors, enhances fault detection and coping abilities and reduces resource consumption costs.

FIG. 1

## Description

## Technical Field

The present disclosure relates to the technical field of electric motor control, and in particular to a control method for electric motors in series connection.

## Background

Control of electric motors with axes connected in series connection is a technology for realizing acceleration, deceleration and positioning control of electric motors independently of a mechanical transmission system. A control manner is to divide the electric motors into several sections according to load characteristics, and a rotational speed and a torque of each section of electric motors are controlled to finally realize the control of the whole mechanical system.

The control of electric motors with axes connected in series connection is proposed to meet requirements of modern industrial systems for higher motion control accuracy and performance. Compared with the traditional mechanical transmission control, the control of electric motors with axes connected in series connection is more flexible, can realize more precise motion control by controlling the rotational speed and the torque of each electric motor, and has higher control accuracy and stability.

However, the control of electric motors with axes connected in series connection also has some defects. Firstly, the control cost is relatively high, because more electric motors and electric motor controllers are needed. Secondly, the cooperation between electric motors needs to be coordinated and set better, otherwise interference and oscillation between electric motors are likely to occur. Finally, since each electric motor needs an independent controller, higher requirements are put forward for electromagnetic interference and anti-interference ability of the system.

## Summary

In view of the defects above, the present disclosure discloses a control method for electric motors in series connection. According to the present disclosure, an expected voltage output vector is kept by a hybrid control algorithm, rotational speed synchronization of the electric motors with axes connected in series connection is realized by an inverse closed-loop rotational speed algorithm, a load and an energy consumption of the electric motors with the axes connected in series connection are kept balanced by an energy consumption balancing algorithm, and fault resolution schemes are combined and selected by an equity selection algorithm, thereby greatly improving the collaboration ability of the electric motors, enhancing the fault detection and coping abilities and reducing the resource consumption cost.

In view of this, the present disclosure provides a control method for electric motors in series connection, including the following steps:

step 1: connecting axes of n electric motors in series connection, and collecting basic parameters of each electric motor,
where a rotary transformer is utilized to acquire the basic parameters of each electric motor, and the basic parameters include an angular displacement, an angular velocity, a rotational speed and a phase current of a rotating shaft;
step 2: synthesizing a voltage space vector reference value from the acquired basic parameters of each electric motor, where a calculation module is utilized to calculate the voltage space vector reference value;
step 3: obtaining an expected voltage output vector based on a hybrid control algorithm and the voltage space vector reference value,
where an inverse transformation module is utilized to acquire the expected voltage output vector;
step 4: realizing rotational speed synchronization and load balancing of the electric motors with the axes connected in series connection,
where a synchronization and balancing module is utilized to realize the rotational speed synchronization and the load balancing of the electric motors with the axes connected in series connection; and the synchronization and balancing module includes a rotational speed synchronization unit and an energy-saving load unit, the rotational speed synchronization unit realizes the rotational speed synchronization of the electric motors with the axes connected in series connection by an inverse closed-loop rotational speed algorithm, the energy-saving load unit keeps a load and an energy consumption of the electric motors with the axes connected in series connection balanced according to the basic parameters of each electric motor by an energy consumption balancing algorithm, and an output terminal of the rotational speed synchronization unit is connected to an input terminal of the energy-saving load unit; and
step 5: monitoring working processes of the electric motors with the axes connected in series connection in real time and coping with emergencies in time,
where a monitoring and feedback module is utilized to realize real-time monitoring and fault coping strategies of the electric motors with the axes connected in series connection.

As a further embodiment of the present disclosure, the calculation module includes a transformation unit and an adjustment unit, the transformation unit transforms acquired electric motor phase current actual value coordinates into current components of axes of the electric motor, the adjustment unit transforms errors between the current components of the axes of the electric motor and null into voltage components of the axes of the electric motor by a PID algorithm, and an output terminal of the transformation unit is connected to an input terminal of the adjustment unit.

As a further embodiment of the present disclosure, the monitoring and feedback module includes a fault diagnosis unit, a strategy protection unit, an emergency braking unit and an energy feedback unit, the fault diagnosis unit detects the acquired basic parameters of each electric motor and the expected voltage output vector value by an anomaly detection algorithm, the strategy protection unit combines and selects fault resolution schemes by an equity selection algorithm, the emergency braking unit performs emergency braking on the faulty electric motor by a contracting brake, the energy feedback unit recovers and reuses energy after the emergency braking by a hybrid feedback algorithm based on FOC and MPPT, an output terminal of the fault diagnosis unit is connected to an input terminal of the strategy protection unit, an output terminal of the strategy protection unit is connected to an input terminal of the emergency braking unit, and an output terminal of the emergency braking unit is connected to an input terminal of the energy feedback unit.

As a further embodiment of the present disclosure, the inverse transformation module includes a rotating-rest unit and a magnitude-phase positioning unit, the rotating-rest unit inversely transforms the voltage components of the axes of the electric motor into coordinate axis components in a two-phase rest frame by means of rotation by 6/2 and 2s/2r, the magnitude-phase positioning unit calculates a magnitude and a phase of a reference value in the two-phase rest frame by the hybrid control algorithm and determines a sector and a required voltage space vector according to the phase, and an output terminal of the rotating-rest unit is connected to an input terminal of the magnitude-phase positioning unit.

As a further embodiment of the present disclosure, a working method of the inverse closed-loop rotational speed algorithm is as follows: first, a mathematical model of the electric motor is established according to back electromotive force, inductance and resistance of the electric motor; then, output characteristics of the electric motor are predicted based on the back electromotive force of the electric motor, and are used in a current control loop; next, a speed control loop is added based on the current control loop; and finally, an output rotational speed of the electric motor is adjusted in real time based on a speed control circuit.

As a further embodiment of the present disclosure, a working method of the hybrid control algorithm is as follows: first, an actual current value and a target current value are compared to obtain a current error signal which is used as a PWM reference signal; then, a power supply voltage is compared and sampled to acquire a difference between a reference voltage value and an actual voltage value; next, the difference is modulated by triangle waves to form a PWM carrier signal; and finally, the PWM reference signal and the PWM carrier signal are compared and adjusted such that the current value is always kept within an error range.

As a further embodiment of the present disclosure, a working method of the energy consumption balancing algorithm includes:

first transforming the acquired basic parameters of each electric motor into a matrix form,

$$X^* = U\sum G = U \left\{ \begin{bmatrix} \sigma_1 & 0 & \cdots & 0 \\ 0 & \sigma_2 & \cdots & 0 \\ \vdots & \vdots & \ddots & \vdots \\ 0 & 0 & \cdots & \sigma_m \end{bmatrix} \begin{bmatrix} G_1 \\ G_2 \\ \vdots \\ G_m \end{bmatrix} \right\} \qquad (1)$$

where in formula (1), $X^*$: represents a parameter matrix formula, $U$: represents an interference matrix, $G$ represents a combination coefficient matrix, $\sigma$ represents a main coefficient, $G_m$ represents a combination effect value, and m represents a number of columns;

transforming a parameter data surface feature into a depth feature by a data transformation function, the data transformation function being:

$$Y^* = \sqrt{X^* B + HT} \qquad (2)$$

where in formula (2), $Y^=$ represents the data depth feature, $X^*$ represents the data surface feature, $B$ represents a transformation parameter, H represents a data dimension parameter, and *T* represents an error adjustment parameter;

performing 180 times of iterative training on the acquired data depth feature to acquire a basic model weight parameter, and performing prediction and recognition based on real-time data, the recognition function being expressed as:

$$E^V = TH\left(Y^* - X^* \sqrt{GB}\right)^V + Y^* X^* B \qquad (3)$$

where in formula (3), $E^V$ represents a correlation between the real-time data and predicted data, and V represents an adjustment cycle;

constraining a training flow parameter to avoid overfitting during training, a constraint function being expressed as:

$$\hat{B} = \left(X^V X^*\right)^{-3} \sqrt{X^T + HY^*} - \sqrt{X^T HY^*} \qquad (4)$$

where in formula (4), $\hat{B}$ represents a training flow parameter constraining variable, $X^V$ represents training flow capture information in a training cycle, and $X^T$ represents data dynamic information in the training cycle; and

determining whether a training flow parameter weight is optimal by comparing change rules of the load and the energy consumption in two adjacent cycles, a comparison result being expressed as:

$$\left\|\hat{X}^t - \hat{X}^{t-1}\right\|_F^V < \sqrt[4]{\varepsilon} \left\|\hat{X}^{t-1}\right\|_F^H \qquad (5)$$

where in formula (5), $\hat{X}^t$ represents parameter information acquired in the training cycle, $\hat{X}^{t-1}$ represents parameter information collected in the adjacent cycle, and $\varepsilon$ represents a difference coefficient between the two adjacent cycles.

As a further embodiment of the present disclosure, a working method of the equity selection algorithm is as follows: first, an initial fault difficulty value is set to 0 such that nodes generate new solutions; then, the nodes acquire privilege to add the new solutions by calculating fault answers, a hash value of the new solutions each meets requirements of normal operation of the electric motor, and when detecting that a trusted node detects an anomaly, a consensus being reached through many negotiations and completed in a short time to confirm the addition of these new solution; next, after collecting enough new solutions, the node selects between the new solutions; and finally, a subsequent fault difficulty value is adjusted according to each equity selection result and a length of equity selection time.

Compared with the prior art, the present disclosure has the following beneficial effects:

According to the present disclosure, the expected voltage output vector is kept by the hybrid control algorithm, the rotational speed synchronization of the electric motors with axes connected in series connection is realized by the inverse closed-loop rotational speed algorithm, the load and the energy consumption of the electric motors with the axes connected in series connection are kept balanced by the energy consumption balancing algorithm, and the fault resolution schemes are combined and selected by the equity selection algorithm, thereby greatly improving the collaboration ability of the electric motors, enhancing the fault detection and coping abilities and reducing the resource consumption cost.

**Brief Description of Figures**

In order to more clearly illustrate the embodiments of the present disclosure or the technical solutions in the prior art, the accompanying drawings used in the description of the embodiments or the prior art will be briefly described below. Apparently, the accompanying drawings in the following description are only some embodiments of the present disclosure, and those skilled in the art can obtain other drawings according to these drawings without any creative work.

FIG. 1 is a flowchart of the present disclosure;

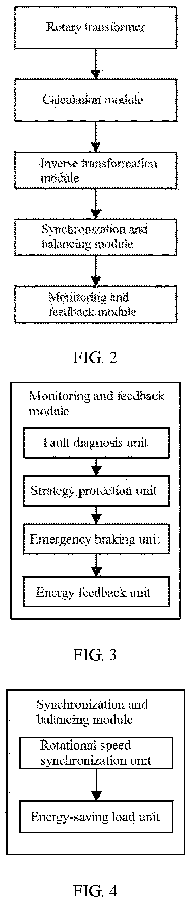

FIG. 2 is a basic architecture diagram of the present disclosure;
FIG. 3 is an architecture diagram of a monitoring and feedback module;
FIG. 4 is an architecture diagram of a synchronization and balancing module; and

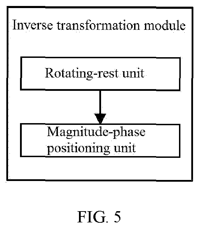

FIG. 5 is an architecture diagram of an inverse transformation module.

**Detailed Description**

The technical solutions in the embodiments of the present disclosure will be clearly and completely described below with reference to the accompanying drawings in the embodiments of the present disclosure. It is apparent that the described embodiments are only a part, rather than all of the embodiments of the present disclosure. It should be understood that these descriptions are merely exemplary, and are not intended to limit the scope of the present disclosure. In addition, in the following description, descriptions of well-known structures and technologies are omitted to avoid unnecessarily confusing the concepts of the present disclosure.

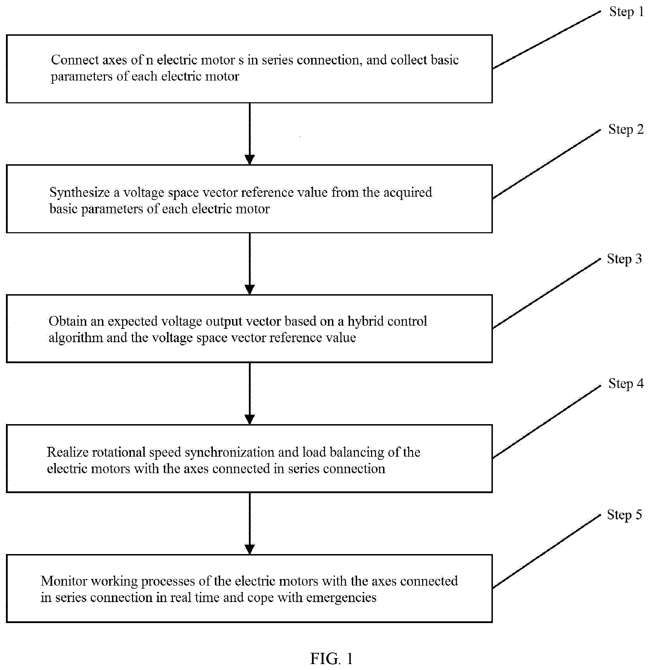

As shown in FIG. 1, a control method for electric motors in series connection, including the following steps:

step 1: connecting axes of n electric motors in series connection, and collecting basic parameters of each electric motor,
where a rotary transformer is utilized to acquire the basic parameters of each electric motor, and the basic parameters include an angular displacement, an angular velocity, a rotational speed and a phase current of a rotating shaft;
step 2: synthesizing a voltage space vector reference value from the acquired basic parameters of each electric motor, where a calculation module is utilized to calculate the voltage space vector reference value;
step 3: obtaining an expected voltage output vector based on a hybrid control algorithm and the voltage space vector reference value,
where an inverse transformation module is utilized to acquire the expected voltage output vector;
step 4: realizing rotational speed synchronization and load balancing of the electric motors with the axes connected in series connection,
where a synchronization and balancing module is utilized to realize the rotational speed synchronization and the load balancing of the electric motors with the axes connected in series connection; and the synchronization and balancing module includes a rotational speed synchronization unit and an energy-saving load unit, the rotational speed synchronization unit realizes the rotational speed synchronization of the electric motors with the axes connected in series connection by an inverse closed-loop rotational speed algorithm, the energy-saving load unit keeps a load and an energy consumption of the electric motors with the axes connected in series connection balanced according to the basic parameters of each electric motor by an energy consumption balancing algorithm, and an output terminal of the rotational speed synchronization unit is connected to an input terminal of the energy-saving load unit; and
step 5: monitoring working processes of the electric motors with the axes connected in series connection in real time and coping with emergencies in time,
where a monitoring and feedback module is utilized to realize real-time monitoring and fault coping strategies of the electric motors with the axes connected in series connection.

An output terminal of the rotary transformer is connected to an input terminal of the calculation module, an output terminal of the calculation module is connected to an input terminal of the inverse transformation module, an output terminal of the inverse transformation module is connected to an input terminal of the synchronization and balancing module, and an output terminal of the synchronization and balancing module is connected to an input terminal of the monitoring and feedback module.

Further, the calculation module includes a transformation unit and an adjustment unit. The transformation unit transforms acquired electric motor phase current actual value coordinates into current components of axes of the electric motor, the adjustment unit transforms errors between the current components of the axes of the electric motor and null into voltage components of the axes of the electric motor by a PID algorithm, and an output terminal of the transformation unit is connected to an input terminal of the adjustment unit.

Further, the monitoring and feedback module includes a fault diagnosis unit, a strategy protection unit, an emergency braking unit and an energy feedback unit. The fault diagnosis unit detects the acquired basic parameters of each electric motor and the expected voltage output vector value by an anomaly detection algorithm, the strategy protection unit combines and selects fault resolution schemes by an equity selection algorithm, the emergency braking unit performs emergency braking on the faulty electric motor by a contracting brake, the energy feedback unit recovers and reuses energy after the emergency braking by a hybrid feedback algorithm based on FOC and MPPT, an output terminal of the fault diagnosis unit is connected to an input terminal of the strategy protection unit, an output terminal of the strategy protection unit is connected to an input terminal of the emergency braking unit, and an output terminal of the emergency braking unit is connected to an input terminal of the energy feedback unit.

In a specific embodiment, a working principle of the monitoring and feedback module is as follows: the basic parameters and the expected voltage output vector value of each electric motor are detected by the anomaly detection algorithm, and detection results are outputted. If a fault occurs, corresponding fault information will be outputted. The optimal scheme is selected from the fault resolution schemes by the equity selection algorithm according to the output results of the fault diagnosis unit. After being selected, the scheme is outputted to the next unit for processing. The scheme outputted by the strategy protection unit is received, and emergency braking is performed on the faulty electric motor by a contracting brake. In this way, more serious faults of the electric motor can be avoided. Finally, the energy after the emergency braking is recovered and reused by the hybrid feedback algorithm based on FOC and MPPT.

Further, the inverse transformation module includes a rotating-rest unit and a magnitude-phase positioning unit. The rotating-rest unit inversely transforms the voltage components of the axes of the electric motor into coordinate axis components in a two-phase rest frame by means of rotation by 6/2 and 2s/2r, the magnitude-phase positioning unit calculates a magnitude and a phase of a reference value in the two-phase rest frame by the hybrid control algorithm and determines a sector and a required voltage space vector according to the phase, and an output terminal of the rotating-rest unit is connected to an input terminal of the magnitude-phase positioning unit.

Further, a working method of the inverse closed-loop rotational speed algorithm is as follows: first, a mathematical model of the electric motor is established according to back electromotive force, inductance and resistance of the electric motor; then, output characteristics of the electric motor are predicted based on the back electromotive force of the electric motor, and are used in a current control loop; next, a speed control loop is added based on the current control loop; and finally, an output rotational speed of the electric motor is adjusted in real time based on a speed control circuit.

In a specific embodiment, a working principle of the inverse closed-loop rotational speed algorithm is as follows: the mathematical model of the electric motor is established, including back electromotive force, inductance and resistance of the electric motor. The performance of the electric motor is accurately analyzed through the mathematical model, thereby laying the foundation for the establishment of the control algorithm. In the control process, the output characteristics of the electric motor are predicted based on the back electromotive force of the electric motor, and are used in a current control circuit, thereby realizing predictability of electric motor control. The speed control loop is added based on the current control loop, thereby realizing double closed-loop control. The output rotational speed of the electric motor is adjusted in real time through the speed control circuit to ensure that the output rotational speed of the electric motor is accurately matched with the target rotational speed, and the control parameters are adjusted to optimize the electric motor system to realize more accurate control results. Multiple experiments and adjustments need to be performed according to actual situations of the electric motors until the optimal control effect is realized, as shown in Table 1.

Table 1 Rotational speed adjustment control table

| Algorithm/factor | Target rotational speed/(r/min) | Adjustment time/ms | Synchronization rate/% | Actual rotational speed/(r/min) |
|---|---|---|---|---|
| Back electromotive force | 3000 | 186 | 81.3 | 2439 |
| Double closed-loop | 3000 | 152 | 89.6 | 2688 |
| Inverse closed-loop rotational speed | 3000 | 27 | 98.7 | 2961 |

As can be seen from the above table, the three rotational speed adjustment control algorithms are respectively back electromotive force, double closed-loop and inverse closed-loop rotational speed. Their target rotational speeds are all 3000 r/min, but they have some differences in the aspects of adjustment time, synchronization rate and actual rotational speed.

1. Back electromotive force adjustment control: The adjustment time is 186 ms, which is longer. The synchronization rate is 81.3%, which indicates an ordinary control effect. The actual rotational speed is 2439 r/min, which is still far from the target rotational speed.
2. Double closed loop adjustment control: The adjustment time is 152 ms, which is shorter. The synchronization rate is 89.6%, which indicates a good control effect. The actual rotational speed is 2688 r/min, which is close to the target rotational speed.
3. Inverse closed-loop rotational speed adjustment control: The adjustment time is 27 ms, which is the shortest. The synchronization rate is the highest, up to 98.7%, which indicates the best control effect. The actual rotational speed is 2961 r/min, which is closest to the target rotational speed.

On the whole, the inverse closed-loop rotational speed adjustment control is better than the other two control algorithms in the aspects of adjustment time, synchronization rate and actual rotational speed.

Further, a working method of the hybrid control algorithm is as follows: first, an actual current value and a target current value are compared to obtain a current error signal which is used as a PWM reference signal; then, a power supply voltage is compared and sampled to acquire a difference between a reference voltage value and an actual voltage value; next, the difference is modulated by triangle waves to form a PWM carrier signal; and finally, the PWM reference signal and the PWM carrier signal are compared and adjusted such that the current value is always kept within an error range.

In a specific embodiment, a working principle of the hybrid control algorithm is as follows: first, current hysteresis control is performed, i.e., high-frequency adjustment is performed on the current, so that the current is always kept in a certain range without hopping and oscillation. Specifically, the actual current value and the target current value are compared to obtain the error signal, and the corresponding control signal is outputted by a controller such that the current value is always kept in the error range. The AC power supply driven by the electric motors is controlled in a PWM manner. Specifically, the power supply voltage is compared and sampled to obtain the difference between the reference voltage value and the actual voltage value, and then, the difference is modulated by triangle waves to form the PWM carrier signal, thereby controlling the size and flow direction of the current. The current hysteresis control and the PWM carrier control are combined to form the hybrid control strategy, thereby realizing more accurate electric motor control. A hybrid control method uses the error signal of the current hysteresis control as the reference signal of the PWM controller, which can realize accurate electric motor driving within the error range. The control system is utilized to realize the hybrid control strategy so as to control the running of the electric motors. The implementation manner can be to use an embedded unit or a DSP to realize the hybrid control algorithm of current hysteresis control and PWM carrier control by programming, so as to accurately control the output voltage and current of the driving electric motor power supply, as shown in Table 2.

Table 2 Electric motor parameter adjustment table

| Algorithm/factor | Current/A | Voltage/V | Expected voltage/V | Adjustment time/ms |
|---|---|---|---|---|
| Current hysteresis | 24.6 | 30.5 | 30 | 113 |
| PWM | 28.4 | 30.7 | 30 | 84 |
| Hybrid control | 20.8 | 30.1 | 30 | 28 |

As can be seen from the above table, the three electric motor parameter adjustment control algorithms are respectively current hysteresis, PWM and hybrid control. They have some differences in the aspects of current, voltage and expected voltage.

1. Current hysteresis adjustment control: In this algorithm, the current is 24.6 A, the voltage is 30.5 V, the expected voltage is 30 V, and the adjustment time is 113 ms.
2. PWM adjustment control: In this algorithm, the current is 28.4 A, the voltage is 30.7 V, the expected voltage is 30 V, and the adjustment time is 84 ms.
3. Hybrid control adjustment control: In this algorithm, the current is 20.8 A, the voltage is 30.1 V, the expected voltage is 30 V, and the adjustment time is 28 ms.

On the whole, the hybrid control algorithm exhibits excellent results in the aspects of current, voltage and expected voltage, and its adjustment time is the shortest, which is 28 ms.

Further, a working method of the energy consumption balancing algorithm includes:

first transforming the acquired basic parameters of each electric motor into a matrix form,

$$X^* = U \sum G = U \left\{ \begin{array}{cccc} \sigma_1 & 0 & \cdots & 0 \\ 0 & \sigma_2 & \cdots & 0 \\ \vdots & \vdots & \ddots & \vdots \\ 0 & 0 & \cdots & \sigma_m \end{array} \right\} \left\{ \begin{array}{c} G_1 \\ G_2 \\ \vdots \\ G_m \end{array} \right\} \tag{1}$$

where in formula (1), $X^*$: represents a parameter matrix formula, $U$: represents an interference matrix, $G$ represents a combination coefficient matrix, $\sigma$ represents a main coefficient, $G_m$ represents a combination effect value, and m represents a number of columns;

transforming a parameter data surface feature into a depth feature by a data transformation function, the data transformation function being:

$$Y^* = \sqrt{X^* B + HT} \tag{2}$$

where in formula (2), $Y^{\#}$ represents the data depth feature, $X^*$ represents the data surface feature, $B$ represents a transformation parameter, H represents a data dimension parameter, and $T$ represents an error adjustment parameter;

performing 180 times of iterative training on the acquired data depth feature to acquire a basic model weight parameter, and performing prediction and recognition based on real-time data, the recognition function being expressed as:

$$E^V = TH\left(Y^* - X^*\sqrt{GB}\right)^V + Y^*X^*B \qquad (3)$$

where in formula (3), $E^V$ represents a correlation between the real-time data and predicted data, and V represents an adjustment cycle;

constraining a training flow parameter to avoid overfitting during training, a constraint function being expressed as:

$$\hat{B} = \left(X^V X^*\right)^{-3}\sqrt{X^T + HY^*} - \sqrt{X^T HY^*} \qquad (4)$$

where in formula (4), $\hat{B}$ represents a training flow parameter constraining variable, $X^V$ represents training flow capture information in a training cycle, and $X^T$ represents data dynamic information in the training cycle; and

determining whether a training flow parameter weight is optimal by comparing change rules of the load and the energy consumption in two adjacent cycles, a comparison result being expressed as:

$$\left\|\hat{X}^t - \hat{X}^{t-1}\right\|_F^V < \sqrt[4]{\varepsilon}\left\|\hat{X}^{t-1}\right\|_F^H \qquad (5)$$

where in formula (5), $\hat{X}^t$ represents parameter information acquired in the training cycle, $\hat{X}^{t-1}$ represents parameter information collected in the adjacent cycle, and $\varepsilon$ represents a difference coefficient between the two adjacent cycles.

In a specific embodiment, a working principle of the energy consumption balancing algorithm is as follows: the system detects and records the energy consumption of each electric motor, including real-time energy consumption and history average energy consumption. When the energy consumption of a certain electric motor in the system extends a set value or anomalies such as overload occur, the energy consumption balancing algorithm will transfer the excess energy to other electric motors that do not exceed the set value through capacitors and other manners. The energy consumption balancing algorithm uses different schemes to manage and adjust the energy consumption of the system by monitoring and analyzing the energy consumption, thereby realizing balanced energy consumption of the system. In actual application, the energy consumption balancing algorithm typically sets a total energy consumption of the system, and when the energy consumption of a certain electric motor in the system exceeds the set value, the energy consumption balancing algorithm will transfer excess energy to other electric motors so as to realize balanced energy consumption of the system, as shown in Table 3.

Table 3 Comparison table of energy consumption distribution

| Algorithm/indicator | A | B | C | D | Frag/piece | Effect/% |
|---|---|---|---|---|---|---|
| Null | 202 | 173 | 127 | 186 | 75 | 81.4 |
| Energy consumption balancing | 204 | 198 | 208 | 194 | 14 | 99.7 |

As can be seen from the above table, the distributions of system energy consumption by different algorithms under no energy consumption distribution and energy consumption balancing conditions are compared. A, B, C and D represents energy consumptions of four electric motors, Frag/piece represents the size of each piece of fragment, and effect/% represents the effect improvement rate of the energy consumption balancing algorithm relative to no energy consumption distribution.

1. Under the condition of no energy consumption distribution, the energy consumptions of the four electric motors are respectively 202, 173, 127 and 186, which has a certain degree of imbalance. The size of each piece of fragment is 75, and the effect is 81.4%.

2. Under the condition of energy consumption balancing, the energy consumptions of the four electric motors are distributed in a balanced way, which are respectively 204, 198, 208 and 194, and the energy consumption balancing effect reaches 99.7%. As can be seen, the energy consumption balancing algorithm is utilized to reasonably distribute the energy, so that the energy consumptions of the electric motors can be well balanced, thereby improving the energy utilization efficiency of the system.

Further, a working method of the equity selection algorithm is as follows: first, an initial fault difficulty value is set to 0 such that nodes generate new solutions; then, the nodes acquire privilege to add the new solutions by calculating fault answers, a hash value of the new solutions each meets requirements of normal operation of the electric motor, and when detecting that a trusted node detects an anomaly, a consensus being reached through many negotiations and completed in a short time to confirm the addition of these new solution; next, after collecting enough new solutions, the node selects between the new solutions; and finally, a subsequent fault difficulty value is adjusted according to each equity selection result and a length of equity selection time.

In a specific embodiment, the pseudocode of the equity selection algorithm is implemented as follows:

```
//an initial fault difficulty value is set to 0

difficulty = 0

// nodes calculate fault answers and acquire privilege to add new solutions

if (calculate_error() == true) {

privilege = true

}

// when a trusted node detects an anomaly, a consensus is reached through many negotiations and completed in a short time

if(detect_exception()== true) {

for (i = 0; I < iterations; i++) {

consensus = negotiate()

if (consensus == true) {

new_solution = generate_solution()

}

}

add_solution(new_solution)

}

//after collecting enough new solutions, the node selects between the new
```

If (collect_solutions()== true) {

selected_solution = select_solution()

// a subsequent fault difficulty value is adjusted according to each equity selection result and a length of equity selection time

adjust_difficulty(selected_solution, selection_time)

}

Although the specific implementations of the present disclosure have been described above, those skilled in the art should understand that these specific implementations are merely examples, and those skilled in the art can make various omissions, substitutions and changes in the details of the above methods and systems without departing from the principles and essence of the present disclosure. For example, it is within the scope of the present disclosure to combine the above method steps to perform substantially the same functions in substantially the same method to realize substantially the same results. Therefore, the scope of the present disclosure is limited only by the appended claims.

**Claims**

1. A control method for electric motors in series connection, comprising the following steps:

step 1: connecting axes of n electric motors in series connection, and collecting basic parameters of each electric motor,
wherein a rotary transformer is utilized to acquire the basic parameters of each electric motor, and the basic parameters comprise an angular displacement, an angular velocity, a rotational speed and a phase current of a rotating shaft;
step 2: synthesizing a voltage space vector reference value from the acquired basic parameters of each electric motor,
wherein a calculation module is utilized to calculate the voltage space vector reference value;
step 3: obtaining an expected voltage output vector based on a hybrid control algorithm and the voltage space vector reference value,
wherein an inverse transformation module is utilized to acquire the expected voltage output vector;
step 4: realizing rotational speed synchronization and load balancing of the electric motors with the axes connected in series connection,
wherein a synchronization and balancing module is utilized to realize the rotational speed synchronization and the load balancing of the electric motors with the axes connected in series connection; and the synchronization and balancing module comprises a rotational speed synchronization unit and an energy-saving load unit, the rotational speed synchronization unit realizes the rotational speed synchronization of the electric motors with the axes connected in series connection by an inverse closed-loop rotational speed algorithm, the energy-saving load unit keeps a load and an energy consumption of the electric motors with the axes connected in series connection balanced according to the basic parameters of each electric motor by an energy consumption balancing algorithm, and an output terminal of the rotational speed synchronization unit is connected to an input terminal of the energy-saving load unit; and
step 5: monitoring working processes of the electric motors with the axes connected in series connection in real time and coping with emergencies in time,
wherein a monitoring and feedback module is utilized to realize real-time monitoring and fault coping strategies of the electric motors with the axes connected in series connection; and
a working method of the energy consumption balancing algorithm comprises:

first transforming the acquired basic parameters of each electric motor into a matrix form,

$$X^* = U\sum G = U \begin{Bmatrix} \sigma_1 & 0 & L & 0 \\ 0 & \sigma_2 & L & 0 \\ M & M & O & M \\ 0 & 0 & L & \sigma_m \end{Bmatrix} \begin{Bmatrix} G_1 \\ G_2 \\ M \\ G_m \end{Bmatrix} \quad (1)$$

wherein in formula (1), $X^*$: represents a parameter matrix formula, $U$ represents an interference matrix, $G$ represents a combination coefficient matrix, $\sigma$ represents a main coefficient, $G_m$ represents a combination effect value, and m represents a number of columns;

transforming a parameter data surface feature into a depth feature by a data transformation function, the data transformation function being:

$$Y^\# = \sqrt{X^* B + HT} \quad (2)$$

wherein in formula (2), $Y^\#$ represents the data depth feature, $X^*$ represents the data surface feature, $B$ represents a transformation parameter, H represents a data dimension parameter, and $T$ represents an error adjustment parameter;

performing 180 times of iterative training on the acquired data depth feature to acquire a basic model weight parameter, and performing prediction and recognition based on real-time data, the recognition function being expressed as:

$$E^V = TH\left(Y^\# - X^*\sqrt{GB}\right)^V + Y^\# X^* B \quad (3)$$

wherein in formula (3), $E^V$ represents a correlation between the real-time data and predicted data, and V represents an adjustment cycle;

constraining a training flow parameter to avoid overfitting during training, a constraint function being expressed as:

$$\hat{B} = \left(X^V X^*\right)^{-3}\sqrt{X^T + HY^\#} - \sqrt{X^T HY^\#} \quad (4)$$

wherein in formula (4), $\hat{B}$ represents a training flow parameter constraining variable, $X^V$ represents training flow capture information in a training cycle, and $X^T$ represents data dynamic information in the training cycle; and

determining whether a training flow parameter weight is optimal by comparing change rules of the load and the energy consumption in two adjacent cycles, a comparison result being expressed as:

$$\left\|\hat{X}^t - \hat{X}^{t-1}\right\|_F^V < \sqrt[4]{\varepsilon}\left\|\hat{X}^{t-1}\right\|_F^H \quad (5)$$

wherein in formula (5), $\hat{X}^t$ represents parameter information acquired in the training cycle, $\hat{X}^{t-1}$ represents parameter information collected in the adjacent cycle, and $\varepsilon$ represents a difference coefficient between the two adjacent cycles.

2. The control method for electric motors in series connection according to claim 1, wherein the calculation module comprises a transformation unit and an adjustment unit, the transformation unit transforms acquired electric motor phase current actual value coordinates into current components of axes of the electric motor, the adjustment unit transforms errors between the current components of the axes of the electric motor and null into voltage components of the axes of the electric motor by a PID algorithm, and an output terminal of the transformation unit is connected to an input terminal of the adjustment unit.

3. The control method for electric motors in series connection according to claim 1, wherein the monitoring and feedback module comprises a fault diagnosis unit, a strategy protection unit, an emergency braking unit and an energy feedback unit, the fault diagnosis unit detects the acquired basic parameters of each electric motor and the expected voltage output vector value by an anomaly detection algorithm, the strategy protection unit combines and selects fault resolution schemes by an equity selection algorithm, the emergency braking unit performs emergency braking on the faulty electric motor by a contracting brake, the energy feedback unit recovers and reuses energy after the emergency braking by a hybrid feedback algorithm based on FOC and MPPT, an output terminal of the fault diagnosis unit is connected to an input terminal of the strategy protection unit, an output terminal of the strategy protection unit is connected to an input terminal of the emergency braking unit, and an output terminal of the emergency braking unit is connected to an input terminal of the energy feedback unit.

4. The control method for electric motors in series connection according to claim 1, wherein the inverse transformation module comprises a rotating-rest unit and a magnitude-phase positioning unit, the rotating-rest unit inversely transforms the voltage components of the axes of the electric motor into coordinate axis components in a two-phase rest frame by means of rotation by 6/2 and 2s/2r, the magnitude-phase positioning unit calculates a magnitude and a phase of a reference value in the two-phase rest frame by the hybrid control algorithm and determines a sector and a required voltage space vector according to the phase, and an output terminal of the rotating-rest unit is connected to an input terminal of the magnitude-phase positioning unit.

5. The control method for electric motors in series connection according to claim 1, wherein a working method of the inverse closed-loop rotational speed algorithm is as follows: first, a mathematical model of the electric motor is established according to back electromotive force, inductance and resistance of the electric motor; then, output characteristics of the electric motor are predicted based on the back electromotive force of the electric motor, and are used in a current control loop; next, a speed control loop is added based on the current control loop; and finally, an output rotational speed of the electric motor is adjusted in real time based on a speed control circuit.

6. The control method for electric motors in series connection according to claim 4, wherein a working method of the hybrid control algorithm is as follows: first, an actual current value and a target current value are compared to obtain a current error signal which is used as a PWM reference signal; then, a power supply voltage is compared and sampled to acquire a difference between a reference voltage value and an actual voltage value; next, the difference is modulated by triangle waves to form a PWM carrier signal; and finally, the PWM reference signal and the PWM carrier signal are compared and adjusted such that the current value is always kept within an error range.

7. The control method for electric motors in series connection according to claim 3, wherein a working method of the equity selection algorithm is as follows: first, an initial fault difficulty value is set to 0 such that nodes generate new solutions; then, the nodes acquire privilege to add the new solutions by calculating fault answers, a hash value of the new solutions each meets requirements of normal operation of the electric motor, and when detecting that a trusted node detects an anomaly, a consensus being reached through many negotiations and completed in a short time to confirm the addition of these new solution; next, after collecting enough new solutions, the node selects between the new solutions; and finally, a subsequent fault difficulty value is adjusted according to each equity selection result and a length of equity selection time.

Step 1

Connect axes of n electric motor s in series connection, and collect basic
parameters of each electric motor

Step 2

Synthesize a voltage space vector reference value from the acquired
basic parameters of each electric motor

Step 3

Obtain an expected voltage output vector based on a hybrid control
algorithm and the voltage space vector reference value

Step 4

Realize rotational speed synchronization and load balancing of the
electric motors with the axes connected in series connection

Step 5

Monitor working processes of the electric motors with the axes connected
in series connection in real time and cope with emergencies

FIG. 1

```
┌─────────────────────────┐
│    Rotary transformer   │
└─────────────────────────┘
            │
            ▼
┌─────────────────────────┐
│   Calculation module    │
└─────────────────────────┘
            │
            ▼
┌─────────────────────────┐
│  Inverse transformation │
│         module          │
└─────────────────────────┘
            │
            ▼
┌─────────────────────────┐
│   Synchronization and   │
│     balancing module    │
└─────────────────────────┘
            │
            ▼
┌─────────────────────────┐
│     Monitoring and      │
│     feedback module     │
└─────────────────────────┘
```

FIG. 2

```
┌───────────────────────────────────┐
│  Monitoring and feedback          │
│  module                           │
│   ┌─────────────────────────────┐ │
│   │    Fault diagnosis unit     │ │
│   └─────────────────────────────┘ │
│                 │                 │
│                 ▼                 │
│   ┌─────────────────────────────┐ │
│   │  Strategy protection unit   │ │
│   └─────────────────────────────┘ │
│                 │                 │
│                 ▼                 │
│   ┌─────────────────────────────┐ │
│   │  Emergency braking unit     │ │
│   └─────────────────────────────┘ │
│                 │                 │
│                 ▼                 │
│   ┌─────────────────────────────┐ │
│   │    Energy feedback unit     │ │
│   └─────────────────────────────┘ │
└───────────────────────────────────┘
```

FIG. 3

```
┌───────────────────────────────────┐
│  Synchronization and              │
│  balancing module                 │
│   ┌─────────────────────────────┐ │
│   │    Rotational speed         │ │
│   │  synchronization unit       │ │
│   └─────────────────────────────┘ │
│                 │                 │
│                 ▼                 │
│   ┌─────────────────────────────┐ │
│   │  Energy-saving load unit    │ │
│   └─────────────────────────────┘ │
└───────────────────────────────────┘
```

FIG. 4

Inverse transformation module

Rotating-rest unit

Magnitude-phase
positioning unit

FIG. 5

## INTERNATIONAL SEARCH REPORT

| International application No. |
|---|
| **PCT/CN2024/089796** |

| A. | CLASSIFICATION OF SUBJECT MATTER |
|---|---|

H02P5/46(2006.01)i; H02P21/18(2016.01)i; H02P21/20(2016.01)i

According to International Patent Classification (IPC) or to both national classification and IPC

| B. | FIELDS SEARCHED |
|---|---|

Minimum documentation searched (classification system followed by classification symbols)

IPC:H02P

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电机, 电动机, 马达, 串联, 转速, 速度, 位置, 编码器, 码盘, 旋转变压器, 旋变, 同步, 负载, 负荷, 能耗, 平均, 均衡, 一致, motor, series connection, speed, position, encoder, rotary transformer, load, synchronization, energy consumption, average, balanced, consistent

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| PX | CN 117060786 A (ZHEJIANG XINKE TRANSMISSION TECHNOLOGY CO., LTD.) 14 November 2023 (2023-11-14)<br>claims 1-8, description, paragraphs [0048]-[0107], and figures 1-5 | 1-8 |
| A | CN 116169901 A (SHENYANG UNIVERSITY OF TECHNOLOGY) 26 May 2023 (2023-05-26)<br>description, paragraphs [0138]-[0265], and figures 1-7 | 1-8 |
| A | CN 111525844 A (HUNAN UNIVERSITY OF TECHNOLOGY) 11 August 2020 (2020-08-11)<br>entire document | 1-8 |
| A | CN 111555665 A (CHINA RAILWAY CONSTRUCTION HEAVY INDUSTRY CORP., LTD.) 18 August 2020 (2020-08-18)<br>entire document | 1-8 |
| A | CN 113890450 A (NANJING SCIYON DRIVE TECHNOLOGY CO., LTD.) 04 January 2022 (2022-01-04)<br>entire document | 1-8 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 July 2024** | **12 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/089796** |

## C.    DOCUMENTS CONSIDERED TO BE RELEVANT

| Category* | Citation of document, with indication, where appropriate, of the relevant passages | Relevant to claim No. |
| --- | --- | --- |
| A | CN 114465527 A (SICHUAN LESTER VACUUM TECHNOLOGY CO., LTD.) 10 May 2022 (2022-05-10)<br>    entire document | 1-8 |
| A | CN 114826030 A (JIANGSU YIKONG INTELLIGENT EQUIPMENT CO., LTD.) 29 July 2022 (2022-07-29)<br>    entire document | 1-8 |
| A | CN 115549528 A (NO.14 RESEARCH INSTITUTE OF CETC) 30 December 2022 (2022-12-30)<br>    entire document | 1-8 |
| A | US 5625262 A (HARNISCHFEGER CORPORATION) 29 April 1997 (1997-04-29)<br>    entire document | 1-8 |

Form PCT/ISA/210 (second sheet) (July 2022)

**INTERNATIONAL SEARCH REPORT**
Information on patent family members

International application No.

**PCT/CN2024/089796**

| Patent document cited in search report | | | Publication date (day/month/year) | Patent family member(s) | | | Publication date (day/month/year) |
|---|---|---|---|---|---|---|---|
| CN | 117060786 | A | 14 November 2023 | None | | | |
| CN | 116169901 | A | 26 May 2023 | None | | | |
| CN | 111525844 | A | 11 August 2020 | None | | | |
| CN | 111555665 | A | 18 August 2020 | None | | | |
| CN | 113890450 | A | 04 January 2022 | None | | | |
| CN | 114465527 | A | 10 May 2022 | None | | | |
| CN | 114826030 | A | 29 July 2022 | None | | | |
| CN | 115549528 | A | 30 December 2022 | None | | | |
| US | 5625262 | A | 29 April 1997 | CA | 2180805 | A1 | 04 July 1997 |
| | | | | CA | 2180805 | C | 26 January 1999 |
| | | | | MX | 9606697 | A | 31 July 1997 |

Form PCT/ISA/210 (patent family annex) (July 2022)